Europäisches Patentamt

European Patent Office

Office européen des brevets

(19)

(11) Publication number: **0 244 235 B1**

# EUROPEAN PATENT SPECIFICATION

(12)

(45) Date of publication of patent specification: **20.01.93**   (51) Int. Cl.5: **C08B 37/10**

(21) Application number: **87303835.0**

(22) Date of filing: **29.04.87**

(54) **Process for the preparation of LMW-Heparin.**

(30) Priority: **30.04.86 DK 1968/86**

(43) Date of publication of application:
**04.11.87 Bulletin 87/45**

(45) Publication of the grant of the patent:
**20.01.93 Bulletin 93/03**

(84) Designated Contracting States:
**AT BE CH DE ES FR GB GR IT LI LU NL SE**

(56) References cited:
**EP-A- 0 113 040**
**WO-A-81/03276**
**US-A- 4 396 762**

**BIOCHEMISTRY, vol. 11, January/February
1972, pages 563-568, American Chemical So-
ciety, Washington, D.C., US; A. LINKER et al.
"Isolation and characterization of oligosac-
charides obtained from heparin by the ac-
tion of heparinase"**

(73) Proprietor: **NOVO NORDISK A/S
Novo Allé
DK-2880 Bagsvaerd(DK)**

(72) Inventor: **Nielsen, Jorgen Ilum
Gedebakken 9
DK-3520 Farum(DK)**

(74) Representative: **Brown, John David et al
FORRESTER & BOEHMERT Franz-
Joseph-Strasse 38
W-8000 München 40(DE)**

Rank Xerox (UK) Business Services

**Description**

The present invention relates to a method for the production of low molecular weight heparin (LMW-heparin) by enzymatic depolymerization of heparin.

Conventional heparin is a heterogenous mixture of mucopolysaccharides covering a molecular weight range from 5000 - 50000 daltons with a number average molecular weight of about 10 - 14000 daltons.

Heparin acts directly or indirectly on the function of a number of proteins particularly the enzymes of the coagulation cascade.

The effects of heparin are influenced by a number of factors, such as the distribution of functional groups in the molecule and the molecular weight. Thus it is firmly established that the latter plays an important role for the activity of heparin, especially the inactivation of Thrombin and Factor Xa mediated by Antithrombin III.

Antithrombin activity demands a minimum heparin molecular weight corresponding to about 18 monosaccharides i.e. about 5400 daltons whereas anti Factor Xa activity can be expressed by heparin molecules as small as 5-6 saccharide units 1500-1800 daltons.

A series of other effects of heparin e.g. antithrombotic effect (heparin oligosaccharides containing 18 monosaccharides or less seem to have poor antithrombotic activity) influence on ADP-induced thrombocyte aggregation, bioavailability after s.c. administration, inhibition by $PF_4$ and HRG as well as the activity against coagulation enzymes of the intrinsic pathway responsible for generating Factor Xa are strongly influenced by the molecular weight of heparin.

In recent years the interest has been centered on heparin fragments or - fractions with high Xal/ antithrombin activity with molecular weight from 4000 deltons to upwards of 6000, since such substances have been reported to have good antithrombotic efficiency and at the same time no or little tendency to cause bleeding complications. They also show enhanced bioavailability especially after subcutaneous administration.

Since the selectivity of heparin action is correlated to the molecular weight, it is likely that a relatively narrow molecular weight range exists in which heparin activity is optimal.

A method for preparing LMW-heparin with a specific, desired molecular weight and a narrow molecular weight distribution i.e. low polydispersity would therefore be advantageous.

The method of this invention enables attainment of any desired molecular weight range of depolymerization product from heparin.

LMW-heparin can be prepared in low yield from conventional heparin by fractionation (DOS 2,944,792 and 2,945.595). Most LMW-heparin is, however, prepared by depolymerization of heparin by either chemical or enzymatic methods followed by fractionation, if necessary (cfr. A. Horner, Heparin, Kakkar, eds. Thomas, 1976 and Perlin et al. Carbohydrate Res. 18, 185 (1971).

Chemical depolymerization of heparin is described in EP published patent applications Nos. 0037,319, 0076,279 and 0014,184, US patent No. 4,351,938, and GB patent No. 2,002,406.

Enzymatic depolymerization is described in US patent No. 3,766,167, GB patent No. 2,002,406, EP published patent application No. 0014,184, and US patent No. 4,396,762.

A major problem inherent to all of the known batch depolymerization processes is to stop the depolymerization reaction at the correct average molecular weight. Moreover, the depolymerization reaction results in heparin fragments of smaller or larger size than the desired molecular weight, even in the absence of side reactions.

In the known depolymerization processes for depolymerization of heparin which use inorganic depolymerization reagents (nitrous acid, hydrogen peroxide, etc.) no preference exists as to size of molecule attached or as to position within the molecule of the bond to be broken. According to R.J. Linhardt et al., Biochem.Biophys.Acta 702 (1982) 197-203 not even the enzyme heparinase makes any such distinction the mode of action of heparinase being random endolytic.

This means that the polydispersity of any heparin depolymerization mixture develops in a statistically predictable way as a function of the degree of depolymerization. Especially at the time when average molecular weight is just above the desired value a large proportion of the fragments have the desired molecular weight but due to the random endolytic nature of the depolymerization they also have a proportionally large chance of becoming further depolymerized to give fragments of suboptimal size.

If a more narrow molecular weight distribution is wanted in the LMW-heparin product the depolymerization mixture must be fractionated, i.e. fragments with higher or smaller molecular weight than desired are separated and discharged. This means loss of yield and waste of the expensive starting material heparin.

It is one object of the present invention to provide a method by which a narrow molecular weight distribution in the LMW-heparin depolymerization mixture is obtained without loss of yield and waste of starting material.

A LMW-heparin product with a narrow molecular weight distribution may be obtained from a continuous process by removing fragments of the desired molecular weight as soon as they are formed to prevent their further depolymerization. This may be done by continuous fractionation of the depolymerization reaction mixture as the depolymerization process proceeds by filtration using a selective filter medium allowing molecules of the desired molecular weight to pass while recycling higher molecular weight material (including enzyme) to be further depolymerized.

It has been found, however, through a number of experiments that the molecular weight of heparin fragments able to pass an ultrafiltration membrane depends strongly on the heparin concentration in the retentate. Higher heparin concentration in the retentate gave higher molecular weight of the fragments in the filtrate.

Also other parameters such as the average molecular weight and polydispersity of the retentate, pH, ionic strength and content of organic modifiers in the reaction mixture as well as the area of the filter compared to product take out influence the molecular weight distribution of the filtrate.

This means that it is not possible to rely on the properties of the filter medium alone to ensure a constant desired molecular weight LMW-heparin product in the filtrate. A large number of parameters must be kept at constant levels in the retentate (i.e. in the depolymerization reaction mixture) in order to obtain a product filtrate with constant, desired molecular weight properties, i.e. average molecular weight and polydispersity.

Due to the removal of product by filtration during the continuous depolymerization reaction it would be a complex problem to calculate, establish and maintain the necessary constant conditions or steady state in the depolymerization reaction mixture.

According to the present invention this problem has been solved by continuously or frequently measuring deviations of $M_n$ and polydispersity D in the filtrate from the desired values whereupon easily controllable reaction parameters in the depolymerization reaction notably substrate concentration; substrate feed rate; enzyme activity, reaction temperature; pressure drop over the membrane filter; and retentate recirculation flow are continuously or frequently changed so as to reduce and keep the deviations from the desired values within specified limits.

By employing the rapid response $A_{235}$ measurement analysis in their experiments the inventors hereof established that steady state depolymerization of heparin can be achieved, and maintained over time. They learned which operating parameters may be controlled readily.

It has been found possible to obtain a constant, narrow molecular weight distribution in the filtrate from a continuous depolymerization of heparin with heparinase.

## Summary of the Invention

In a broad aspect the present invention provides a process for the production of low molecular weight heparin (LMW-heparin) by enzymatic depolymerization of heparin comprising the steps of:

continuously feeding an aqueous solution of heparin into a heparinase containing reactor and therein subjecting the heparin to enzymatic depolymerization;

removing depolymerized heparin solution from the reactor, then subjecting the solution of depolymerized heparin to ultrafiltration thereby producing a retentate and a filtrate;

recycling at least a portion of the retentate to the reactor, and;

recovering an LMW-heparin product from the filtrate; wherein the average molecular weight and the polydispersity of the filtrate are continuously or frequently determined whereupon possible deviations from the desired values are counteracted by correcting the process parameters of the enzymatic depolymerization reaction.

## Brief Description of the Drawings

The present invention is further illustrated by reference to the attached drawings wherein:

Figure 1 illustrates the flow for a preferred mode for the continuous heparin depolymerization process;

Figure 2 illustrates the HPLC measurements on different fractions sampled during the course of the continuous depolymerization of Example 1; and

Figure 3 illustrates the molecular weight of different fractions during the continuous depolymerization of Example 2.

The average molecular weight of heparin or a LMW-heparin may be given as the number average

molecular weight ($M_n$), i.e. weight/number of moles, or as weight average molecular weight ($M_W$)or peak molecular weight ($M_{peak}$). $M_W$ or $M_{peak}$ are normally used to characterize heparin or LMW-heparin products.

The molecular weight of the product may be determined by a number of different methods, e.g. gel permeation chromatography (GPC/HPLC) (N. Sugisaka, F.J. Petracek: Rapid molecular size characterization of heparins by high pressure liquid chromatography. Fed.Proc. 36(1), 89-92, 1977), low angle laser light scattering (LALLS) (D.Lecacheux, R. Panams, G. Brigand,, G. Martin: Molecular weight distribution of carrageenans by size exclusion chromatography and low angle laser light scattering. Carbohydrate Polymers 5, 423-440, 1985), low angle X-ray scattering (S.S. Stivala, M. Herbst, O. Kratky, I. Pilz: Physico-chemical studies of fractionated bovine heparin V, Arch.Biochem.Biophys 127, 795-802, 1968), viscosity measurements and equilibrium centrifugation (S.E. Lasker, S.S. Stivala: Physicochemical studies of fractionated bovine heparin I. Arch.Biochem.Biophys. 115, 360-372, 1966), and osmotic pressure measurements and dialysis equilibrium (K.E. van Holde: Physical Biochemistry, section 2.3, p. 39-47. Prentice-Hall, Inc., New Jersey, 1971). However, a more preferred method would be one with a minimal lag time such as a spectrophotometric determination of functional groups created in the depolymerization process.

The enzymatic depolymerization process using heparinase lends itself to a spectrophotometric number average molweight ($M_n$) determination since the enzymatic process is eliminative creating one reducing endgroup and one endgroup consisting of a $\Delta$ 4.5-unsaturated-iduronic acid derivative having a distinct UV-absorption at 230-235 nm. The molar absorption coefficient for a number of LMW-heparin fragments of di-,tetra-,hexa-, and oligo saccharides was published by Linker and Hovingh (Biochem. 11(1972), 563-568). The average value of the published molar absorption coefficients is 5500.

An equation such as

$$\frac{1}{M_n} = \frac{1}{M_{n,u}} + \frac{\Delta A_{235}}{c \cdot \varepsilon} \qquad (1)$$

giving the relationship between number average molecular height ($M_n$) and increase in absorption at 235nm is easily derived.

In formula (1) $M_n$ is the number average molecular weight of the depolymerized product, $M_{n,u}$ is the number average molecular weight of the heparin substrate, c is the substrate concentration (g/l), $\Delta A_{235}$ is the increase in absorption at 235 nm and $\varepsilon$ is the molar absorption coefficient.

Calculation of $M_n$ is possible when $M_n$ of the heparin substrate ($M_{n,u}$), substrate concentration (c, g/l) and the absorption coefficient ($\varepsilon$) of the unsaturated depolymerization products are known and $\Delta A_{235}$ is measured.

In a number of experiments heparin was depolymerized with heparinase partially purified using hydroxyl apatite chromatography according to Linker and Hovingh (Methods in Enzymology 28(1972), 902-911).

The number average molecular weight $M_n$, was calculated using equation (1) and using the published value of $\varepsilon$ = 5500, and compared to $M_n$ determined by GPC-HPLC.

It was consistently found however that the calculated value of $M_n$ ($M_n(\Delta A)$) differed from the value of $M_n$ found using HPLC ($M_n$(HPLC)), by up to 20%.

Rearrangement of (1) into

$$\Delta A_{235} = c \cdot \varepsilon \left( \frac{1}{M_n} - \frac{1}{M_{n,u}} \right) \qquad (2)$$

allows calculation of an absorption increase $\Delta A_{235}$ corresponding to a desired number average molecular weight $M_n$. But again experiments showed that if the depolymerization was halted at the calculated value of $\Delta A_{235}$ the actual $M_n$ determined by HPCL was considerably higher than the desired $M_n$ if the value of $\varepsilon$ = 5500 found by Hovingh and Linker was used.

It was concluded that the poor correspondance between $M_n(\Delta A)$ and $M_n$(HPLC) was caused by the use of the value of $\varepsilon$ = 5500.

Rearrangement of equation (1) into

$$\epsilon = \frac{\Delta A_{235}}{c} \cdot \frac{M_n \cdot M_{n,u}}{(M_{n,u} - M_n)} \qquad (3)$$

shows that $\epsilon$ may be calculated using known values of c and $M_{n,u}$ and simultaneously determined values of $\Delta A_{235}$ and $M_n$(HPLC).

In this way a value of $\epsilon = 7600$ was found which gave close correlation between calculated $M_n(\Delta A)$ and observed $M_n$(HPLC) in a number of experiments.

Although equation (1) above applies to a batch depolymerization process it has now been found that $M_n$ of the product filtrate from the continuous depolymerization reaction can be calculated using equation (1) and a value of $\epsilon = 7600$ provided that the system is in or near steady state condition. Deviations from steady state reduces the accuracy of the calculation of $M_n$, but still gives information on the direction of the necessary changes. In equation (1) $M_{n,u}$ is known, $\Delta A_{235}$ is measured using e.g. an on-line spectrophotometer, and c may be found measuring the refractive index RI of the filtrate using an on-line calibrated RI-detector, or by measuring the UV-absorption at two different wave lengths, e.g. 197 and 235 nm.

According to a preferred embodiment of the present invention the light absorption of the filtrate is measured and change therein is used to control the depolymerization reaction.

As RI and $A_{235}$ measurement on the filtrate gives almost instantaneous information about the status of the process the necessary corrections of the process parameters can be made immediately where deviations from the desired values of molecular weight or polydispersity are observed.

It is obvious for the person skilled in the art that the increase in UV-absorption caused by formation of unsaturated degradation products by the action of heparinase on heparin may be measured at other wave lengths than 235 nm. The absorption coefficient is, however, preferably measured at 235 nm because it has its maximum at this wave length.

The depolymerization reaction may be controlled by regulation of substrate feed rate, substrate feed concentration to substrate flow rate ratio, and enzyme activity. Changes of substrate feed rate may be obtained by changing substrate flow rate or substrate feed concentration or both. Changes of substrate feed concentration to substrate flow rate ratio may be obtained by changing substrate feed concentration or substrate flow rate or both. By "substrate flow rate" as used herein is meant volume of substrate per time unit (e.g. liter/hour). By "substrate feed concentration" is meant heparin concentration in substrate fed into the system (e.g. mg/ml). By "substrate feed rate" is meant weight of heparin fed into the system per time unit (e.g. g/hour). "Substrate flow rate" x "substrate feed concentration" = "substrate feed rate".

Enzyme activity may be increased by adding enzyme or by increase of reaction temperature and may be decreased by decreasing reaction temperature or by removing enzyme from the reactor (e.g. if immobilized). Further parameters which may be used to control the depolymerization reaction are the pressure drop over the membrane filter or the retentate recirculation flow.

According to the present invention the corrections of the process parameters may be conducted as follows:

a) If $M_n$ of the filtrate is higher than desired, substrate feed rate may be decreased by decreasing substrate flow rate or substrate feed concentration or both or by increasing the enzyme activity. If $M_n$ is lower than desired the opposite applies.

b) If the polydispersity of the filtrate is higher than desired, substrate feed concentration to substrate flow rate ratio may be decreased by decreasing the substrate feed concentration or increasing substrate flow rate or both. If the polydispersity is lower than desired the opposite applies.

c) If $M_n$ and polydispersity both deviate from the desired values, combinations of the above mentioned corrections may be made.

The corrections may conveniently be carried out as set forth in the following examples where example 1 illustrates regulation of $M_n$ alone and example 2 illustrates regulation of $M_n$ and polydispersity in that order.

The heparinase used according to the present invention is prepared in per se known manner as described by Hovingh and Linker (Methods in Enzymology 28 (1972), 902-911 and J.Biol.Chem. 245 (1970), 6170-6175) by culturing Flavobacterium heparium on a heparin containing substrate, cell harvesting and cell rupture by sonication end purification by among others chromatography on hydroxy-apatite.

The LMW-heparin product may be precipitated by addition of alcohol (preferably 0.6-10 vol/vol) and the depolymerized product may be purified by methods well known in the art e.g. bleaching, sterile filtration and alcohol precipitation.

The heparin depolymerization reaction is preferably conducted at a temperature of 25-40°C and at a pH of 6-8.

One heparinase unit is defined according to Hovingh and Linker, Methods in Enzymol., 28(1972), 902-911.

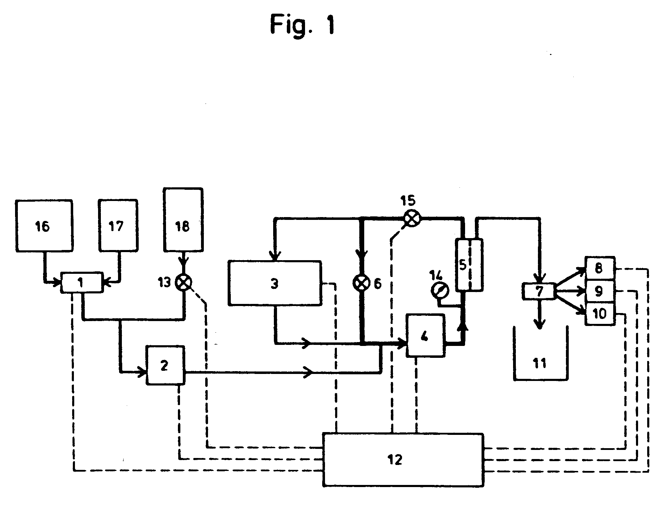

To ensure a fast feed back control of the depolymerization reaction depending on the deviation in the average molecular weight and polydispersity from the desired values the process may be conducted as shown in fig. 1. Fig. 1 illustrates a special embodiment of the present invention particularly useful for the enzymatic depolymerization of heparin to LMW-heparin of low polydispersity employing immobilized heparinase as the main source of enzyme. However, means for supplementing with liquid heparinase is also shown.

Heparin substrate of a predetermined desired concentration is provided by mixing of a heparin stock solution (16) with buffer (17) in mixer (1) and fed into a closed circuit reaction zone by means of a dosage pump (2). The reaction zone consists of a retentate circulation pump (4), an ultrafilter (5), an enzyme reactor (3) and a shunt line with a valve (6). Since the reaction zone is closed except for the substrate feed-line and the ultrafiltration membrane, the filtrate flow will be equal to the substrate flow. A fast retentate flow is desirable to prevent polarization on the ultrafiltration membrane. This might, however, be damaging to the immobilized enzyme bed due to the pressure drop created across the bed. The main stream of retentate is therefore circulated through the shunt-line and valve (6), which is opened or closed to regulate the pressure drop across the enzyme bed.

The filtration pressure across the ultrafiltration membrane which is measured by manometer (14) may be increased as necessary by partly closing valve (15). The enzyme reaction temperature may be regulated by a water circulation mantle (around reactor 3 (not illustrated)). The LMW-heparin fraction leaving the depolymerization zone in the ultrafiltrate is analyzed to determine its average molecular weight and polydispersity. A sampling device (7), schematically indicated automatically takes samples before the filtrate passes into collector (11). The samples pass to instruments 8, 9, 10.

In the preferred illustrated embodiment of the present invention three parameters are measured: refractive index (RI), UV-absorption at 235 nm ($A_{235}$) and polydispersity (D). RI and $A_{235}$ are measured continuously or at short intervals by means of an RI-detector (8) and a spectrophotomer (9), respectively. D is determined occasionally by GPC-HPLC determination of $M_n$ and $M_w$ by chromatography instrument(s) (10). The data obtained from the samples are fed to a data processing unit (12) which calculates LMW-heparin concentration c (g/liter) from RI, number average molecular weight $M_n$ (Dalton) from c and the increase in absorption at 235 nm ($\Delta A_{235}$), enzyme activity (NE) from NE = $\Delta A_{235}$ x flow rate, and polydispersity D from HPLC data. The processing unit regulates the process based on the calculated parameters $M_n$, D, c and NE by regulating substrate concentration via mixer (1), flow rate (SFV) via pump (2), enzyme activity from stock solution (18) via an enzyme addition valve (13) and/or a reaction temperature regulation mean (not shown), pressure drop over the membrane filter through valve (15) and the retentate circulation flow through circulation pump (4). The control circuits and the automatically operated equipment schematically shown in the flow sheet of Figure 1 are conventional systems and devices and, therefore, need not to be described herein.

A continuous mode depolymerization of heparin in a laboratory scale system according to Figure 1 is hereinafter exemplified.

### Example 1

Flavobacterium heparinum was grown on a heparin containing substrate and heparinase prepared from a homogenized cell concentrate by filtration through 100 KD and concentration on 30 KD ultrafilters. The enzyme was immobilized on CNBr activated Sepharose 4B in the presence of heparin.

750 units of immobilized heparinase, with a calculated capacity of depolymerizing~-5-600 mg/h of heparin of $M_{n,u}\sim11500$, to LMW-heparin of $M_n\sim4000$ daltons at ambient temperature, was placed in enzyme reactor (3). The system was filled with heparin substrate solution (10 mg/ml in 0.1 M Na-acetate, 0.005 M Ca-acetate pH 7.0), freed of entrapped air, and heparin substrate was fed into the system at an initial rate of 60 ml/h at ambient temperature.

After a few minutes the filtrate flow rate corresponded exactly to the substrate flow rate. Fractions of 10 ml were collected throughout the experiment. Refractive index, RI was monitored continuously, and absorption at 235 nm, $A_{235}$, was measured frequently, at least once per fraction, after dilution of samples with 1.7 M perchloric acid.

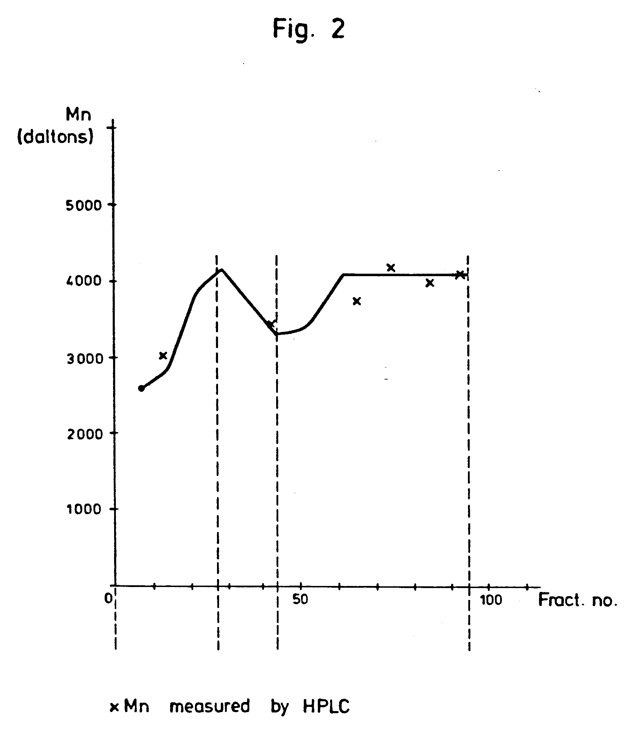

The number average molecular weight of the product, $M_n$ was calculated from the R1 and $A_{235}$ values,

and plotted against fraction number, as shown in fig. 2.

HPLC-molecular weight analysis was carried out on a few fractions. The results confirm the calculated $M_n$ values as is apparent from fig. 2 and in addition provide figures of weight average molecular weight, $M_w$, and polydispersity, D (from $D = M_w/M_n$). As the calculated $M_n$ corresponds well to $M_n$ value measured by HPLC the present example establishes that equation (1) can be used for the calculation of $M_n$ of the LMW-heparin product from a continuous depolymerization reaction.

The RI, $A_{235}$ procedure gives almost instantaneous information about the status of the process and allows corrective measures to be taken.

The present example furthermore illustrates obtaining a desired $M_n$ of the product by adjusting the substrate flow rate at fixed substrate feed concentration.

The experiment was carried out in three phases.

1) Flow rate 60 ml/hour: In this phase the $M_n$ of the product increased steadily and reached the desired value of 4000 daltons after ~ 22 fractions.

2) Flow rate 30 ml/hour: After a few additional fractions the flow-rate was reduced to 30 ml/hour from fraction No. 27.

As seen from fig. 2 the response was a steady decrease of $M_n$.

3) Flow rate 60 ml/hour: When the $M_n$ of the product had reached a value of 3300 daltons in fraction No 43 still descending, the initial flow rate of 60 ml/hour was resumed. The drop in $M_n$ stopped and was followed again by a steady increase which levelled out at fraction No. 60. From this point and through the rest of the experiment the small variations in the observed parameters indicated that a steady state was obtained.

For comparison immobilized heparinase was employed to depolymerize heparin in batch-type-reactions. In one experiment heparin was depolymerized to a number average molecular weight, $M_n \sim 4000$ daltons, comparable to the $M_n$ of the "steady state" product filtrate of the continuous process.

In another experiment, heparin was depolymerized to a weight average molecular weight, $M_w$ comparable to the $M_w$ of the "steady state" product of the continuous process.

$M_n$ and $M_w$ distributions were analyzed by HPLC. Results from the two types of reaction are given in the table below.

Table I

| Continuous reaction Fraction No. | $M_w$ | $M_n$ | $D$ | $M_n$ |
| --- | --- | --- | --- | --- |
| | (measured by HPLC) | | | (calc. from RI and $A_{235}$) |
| 65 | 6152 | 3734 | 1.65 | 3950 |
| 74 | 7365 | 4179 | 1.76 | 4120 |
| 84 | 6650 | 3979 | 1.67 | 3950 |
| 94 | 6823 | 4114 | 1.66 | 4120 |
| average | 6748 | 4002 | 1.69 | 4035 |
| | S.D.±500 | S.D.±200 | S.D.±0.05 | S.D.±100 |

Batch reaction 1 (to give $M_n \sim 4000$)

| Sample No. | $M_w$ | $M_n$ | $D$ |
| --- | --- | --- | --- |
| 1 | 7894 | 3996 | 1.98 |
| 2 | 7507 | 3937 | 1.91 |
| 3 | 7503 | 3897 | 1.93 |
| average | 7635 | 3943 | 1.94 |
| | S.D.±225 | S.D.±50 | S.D.±0.04 |

Batch reaction 2 (to give $M_w$ 6700)

| $M_w$ | $M_n$ | $D$ |
| --- | --- | --- |
| 6681 | 3175 | 2.10 |

It appears from the above that the polydispersity of the LMW-heparin product from the continuous process is remarkably reduced as compared to a batch depolymerization process. It furthermore appears the calculated $M_n$ values are in good agreement with the measured $M_n$ values for the continuous reaction.

Example 2

Heparin was depolymerized to LMW-heparin by immobilized heparinase, using the apparatus and methods of detection and calculation of example 1.

Regulation of the process was carried out in two phases.

In phase 1, as in example 1 regulation of substrate flow rate in response to deviation of $M_n$ in the product filtrate from the desired value about 4000 dalton was used to obtain a steady state in which the substrate flow rate corresponded to the desired $M_n$-value in the filtrate.

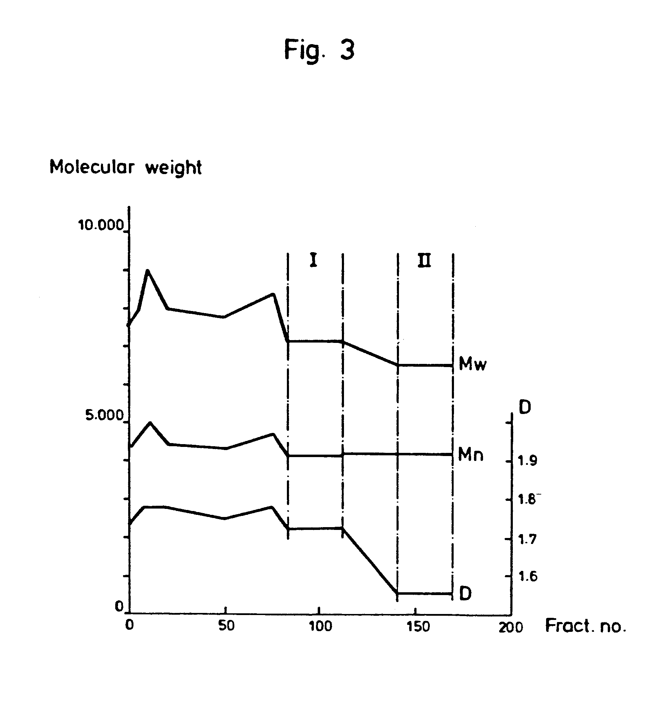

As seen in table II and illustrated in fig. 3 the initial substrate flow rate of 60 ml per hour of 10 mg per ml heparin substrate was reduced step-wise to 12 ml per hour corresponding to a substrate feed rate of 120 mg per hour to obtain a steady state (I) as from fraction No. 78.

The number average molecular weight and polydispersity of the steady state LMW-heparin product found by GPC-HPLC analysis was $M_n$ = 4150 and $D$ = 1.71 corresponding to a weight average molecular weight $M_w$ = 7100.

In the second phase from fraction No. 114 the substrate feed concentration to substrate flow rate ratio was changed 25-fold by a five fold reduction of substrate feed concentration to 2 mg heparin per ml and a five-fold increase in substrate flow rate to 60 ml per hour thereby maintaining the substrate feed rate of 120 mg heparin per hour.

The changes resulted in a new steady state (II) from fraction No. 140 as seen from table II and fig. 3.

The number average molecular weight $M_n$ remained practically unaltered but the polydispersity of the product was considerably decreased to the low value of $D$ = 1.55, corresponding to $M_w$ = 6450 as seen in

8

table II and fig. 3.

Table II

| Fract.No.*) | Subst.conc. (mg/ml) | Flow rate (ml/h) | $M_n$ (calculated) | $M_n$ | D | $M_w$ |
|---|---|---|---|---|---|---|
| | | | | (GPC-HPLC anal.) | | |
| 1 | 10 | 60 | 3850 | 4300 | 1.73 | 7450 |
| 6 | - | - | 4300 | 4500 | 1.73 | 7800 |
| 7 | - | 30 | 4500 | | | |
| 9 | - | - | 4700 | 4750 | 1.78 | 8450 |
| 10 | - | 18 | 4900 | 5000 | 1.76 | 8800 |
| 20 | - | - | 4563 | 4450 | 1.79 | 7950 |
| 50 | - | - | 4100 | 4350 | 1.76 | 7650 |
| 75 | - | - | 4350 | 4700 | 1.78 | 8350 |
| 80 | - | 12 | 4300 | 4150 | 1.71 | 7100 |
| 100 | - | - | | 4150 | 1.69 | 7000 |
| 110 | - | - | | 4050 | 1.74 | 7050 |
| 115 | 2 | 60 | | 4100 | 1.67 | 6725 |
| 130 | - | - | | 4250 | 1.65 | 7000 |
| 140 | - | - | | 4050 | 1.58 | 6400 |
| 150 | - | - | | 4150 | 1.55 | 6450 |
| 160 | - | - | | 4200 | 1.55 | 6500 |
| 170 | - | - | 4500 | 4300 | 1.55 | 6650 |

*) Fraction size: 10 ml

It may be seen in the examples 1 and 2 data, graphically illustrated in Figures 2 and 3 respectively, that the continuous depolymerization according to the present invention operated for extended periods without upsets, demonstrating that the continuous depolymerization reaction system is relatively stable. Accordingly, practice of this invention contemplates conduct of continuous depolymerization of heparin without control thereof through $A_{235}$ or like measurements, e.g. control through HPLC molecular weight analysis measurement. However, as has already been pointed out, control through $A_{235}$ measurement constitutes the preferred practice.

Also, it may be seen in the data from Example 2 that quite low polydispersibility levels can be achieved in the LMW-heparin product produced according to the invention, achieving (see fractions 140 to 170) a polydispersibility in the range of 1-1.6 that is preferred in practice of this invention.

The features disclosed in the foregoing description, in the following claims and/or in the accompanying drawings may, both separately and in any combination thereof, be material for realising the invention in diverse forms thereof.

**Claims**

1. A process for the production of low molecular weight heparin (LMW-heparin) by enzymatic depolymerization of heparin comprising the steps of:

continuously feeding an aqueous solution of heparin into a heparinase containing reactor and therein subjecting the heparin to enzymatic depolymerization;

removing depolymerized heparin solution from the reactor, then subjecting the solution of depolymerized heparin to ultrafiltration thereby producing a retentate and a filtrate;

recycling at least a portion of the retentate to the reactor, and;

recovering an LMW-heparin product from the filtrate;

wherein the average molecular weight and the polydispersity of the filtrate are continuously or frequently determined whereupon possible deviations from the desired values are counteracted by correcting process parameters of the enzymatic depolymerization reaction.

2. A process according to Claim 1 wherein continuous or frequent refractive index (RI) and absorbtion at 235nm ($A_{235}$) measurements are made on the filtrate, the measurement results being employed to calculate the number average molecular weight $M_n$ of the LMW-heparin product in the filtrate.

3. A process according to Claim 1 wherein substrate feed rate is decreased if the average molecular weight of depolymerized heparin in the filtrate is higher than desired.

4. A process according to Claim 1 wherein substrate feed rate is increased if the average molecular weight of depolymerized heparin in the filtrate is lower than desired.

5. A process according to Claim 1 wherein the heparin substrate feed concentration to substrate flow rate ratio is decreased when the polydispersity of the depolymerized heparin in the filtrate is higher than desired.

6. A process according to Claim 1 wherein the heparin substrate feed concentration to substrate flow rate ratio is increased when the polydispersity of the depolymerized heparin filtrate is lower than desired.

7. A process according to Claim 1 wherein the enzyme activity of the heparinase is varied, being decreased if the average molecular weight of the heparin depolymerization product becomes too low and enzyme activity being increased if the average molecular weight of the heparin depolymerization product becomes too high.

8. A process according to Claim 1 wherein the heparinase is used in immobilized form.

9. A process according to Claim 1 wherein the polydispersity of the depolymerization product is from about 1 to about 1.6.

**Patentansprüche**

1. Verfahren zur Herstellung von Heparin mit niedrigem Molekulargewicht (LMW-Heparin) durch enzymatische Depolymerisation von Heparin, welches die Schritte umfaßt:

Kontinuierliches Zuführen einer wäßrigen Heparinlösung in einen Heparinase enthaltenden Reaktor und Unterwerfen des Heparins darin unter enzymatische Depolymerisation;

Entfernen depolymerisierter Heparinlösung aus dem Reaktor, anschließend Unterwerfen der Lösung von depolymerisiertem Heparin unter Ultrafiltration, wodurch ein Retentat und ein Filtrat produziert wird;

Rückführen wenigstens eines Teils des Retentats zum Reaktor und;

Gewinnen eines LMW-Heparinproduktes aus dem Filtrat;

wobei das mittlere Molekulargewicht und die Polydispersität des Filtrats kontinuierlich oder häufig bestimmt werden, woraufhin möglichen Abweichungen von den gewünschten Werten durch Korrigieren der Verfahrensparameter der enzymatischen Depolymerisierungsreaktion entgegengewirkt wird.

2. Verfahren nach Anspruch 1, dadurch gekennzeichnet, daß kontinuierliche oder häufige Messungen des Brechungsindex (RI) und der Absorption bei 235 nm ($A_{235}$) am Filtrat durchgeführt werden, wobei die Meßergebnisse verwendet werden, um das Molekulargewicht im Zahlenmittel $M_n$ des LMW-Heparinproduktes im Filtrat zu berechnen.

3. Verfahren nach Anspruch 1, dadurch gekennzeichnet, daß die Substratzufuhrgeschwindigkeit gesenkt wird, wenn das mittlere Molekulargewicht von depolymerisiertem Heparin im Filtrat höher als gewünscht ist.

4. Verfahren nach Anspruch 1, dadurch gekennzeichnet, daß die Substratzufuhrgeschwindigkeit erhöht wird, wenn das mittlere Molekulargewicht von depolymerisiertem Heparin im Filtrat niedriger als gewünscht ist.

5. Verfahren nach Anspruch 1, dadurch gekennzeichnet, daß das Verhältnis von Heparinsubstrat-Zufuhrkonzentration zu Substratfließgeschwindigkeit gesenkt wird wenn die Polydispersität des depolynerisierten Heparins im Filtrat höher als gewünscht ist.

**6.** Verfahren nach Anspruch 1, dadurch gekennzeichnet, daß das Verhältnis von Heparinsubstrat-Zufuhrkonzentration zu Substratfließgeschwindigkeit erhöht wird, wenn die Polydispersität des depolymerisierten Heparinfiltrats niedriger als gewünscht ist.

**7.** Verfahren nach Anspruch 1, dadurch gekennzeichnet, daß die Enzymaktivität der Heparinase variiert wird, wobei diese gesenkt wird, wenn das mittlere Molekulargewicht des Heparin-Depolymerisationsproduktes zu niedrig wird, und die Enzymaktivität erhöht wird, wenn das mittlere Molekulargewicht des Heparin-Depolymerisationsproduktes zu hoch wird.

**8.** Verfahren nach Anspruch 1, dadurch gekennzeichnet, daß die Heparinase in immobilisierter Form verwendet wird.

**9.** Verfahren nach Anspruch 1, dadurch gekennzeichnet, daß die Polydispersität des Depolymerisationsproduktes von etwa 1 bis etwa 1,6 beträgt.

**Revendications**

**1.** Un procédé pour la production d'héparine de bas poids moléculaire (FPM-héparine) par dépolymérisation enzymatique de l'héparine, comprenant les étapes de :
   introduction en continu d'une solution aqueuse d'héparine dans un réacteur contenant de l'héparinase pour y soumettre l'héparine à une dépolymérisation enzymatique ;
   évacuation de la solution d'héparine dépolymérisée du réacteur, puis ultrafiltration de la solution d'héparine dépolymérisée pour produire un rétentat et un filtrat ;
   recyclage d'au moins une portion du rétentat dans le réacteur ; et
   récupération d'un produit constitué de FPM-héparine à partir du filtrat ;
   dans lequel le poids moléculaire moyen et la polydispersité du filtrat sont déterminés en continu ou fréquemment, si bien que les déviations possibles relatives aux valeurs désirées sont contrecarrées par correction des paramètres opératoires de la réaction de dépolymérisation enzymatique.

**2.** Un procédé selon la revendication 1, dans lequel on effectue sur le filtrat des mesures continues ou fréquentes de l'indice de réfraction (IR) et de l'absorption à 235 nm ($A_{235}$), les résultats des mesures étant utilisés pour calculer la moyenne en nombre du poids moléculaire $M_n$ de la FPM-héparine produite dans le filtrat.

**3.** Un procédé selon la revendication 1, dans lequel la vitesse de l'alimentation en substrat est réduite lorsque le poids moléculaire moyen de l'héparine dépolymérisée dans le filtrat est supérieur à la valeur désirée.

**4.** Un procédé selon la revendication 1, dans lequel la vitesse de l'alimentation en substrat est accrue lorsque le poids moléculaire moyen de l'héparine dépolymérisée dans le filtrat est inférieur à la valeur désirée.

**5.** Un procédé selon la revendication 1, dans lequel le rapport de la concentration de l'alimentation en substrat d'héparine au débit du substrat est réduit lorsque la polydispersité de l'héparine dépolymérisée dans le filtrat est supérieure à la valeur désirée.

**6.** Un procédé selon la revendication 1, dans lequel le rapport de la concentration de l'alimentation en substrat d'héparine au débit du substrat est accru lorsque la polydispersité de l'héparine dépolymérisée dans le filtrat est inférieure à la valeur désirée.

**7.** Un procédé selon la revendication 1, dans lequel on fait varier l'activité enzymatique de l'héparinase, en la réduisant, lorsque le poids moléculaire moyen du produit de dépolymérisation de l'héparine devient trop faible, et en accroissant l'activité ensymatique, lorsque le poids moléculaire moyen du produit de dépolymérisation de l'héparine devient trop élevé.

**8.** Un procédé selon la revendication 1, dans lequel l'héparinase est utilisée sous une forme immobilisée.

**9.** Un procédé selon la revendication 1, dans lequel la polydispersité du produit de dépolymérisation est d'environ 1 à environ 1,6.

# Fig. 1

# Fig. 2

x Mn  measured  by  HPLC

# Fig. 3